(19) Europäisches Patentamt
European Patent Office
Office européen des brevets

(11) EP 3 706 199 B1

(12) # EUROPEAN PATENT SPECIFICATION

(45) Date of publication and mention of the grant of the patent:
**24.05.2023 Bulletin 2023/21**

(21) Application number: **20160978.1**

(22) Date of filing: **04.03.2020**

(51) International Patent Classification (IPC):
***H01M 50/446*** *(2021.01)* ***H01M 10/052*** *(2010.01)*
***H01M 50/414*** *(2021.01)* ***H01M 50/42*** *(2021.01)*
***H01M 50/451*** *(2021.01)*

(52) Cooperative Patent Classification (CPC):
**H01M 10/052; H01M 50/414; H01M 50/42; H01M 50/446; H01M 50/451;** H01M 50/417; Y02E 60/10

(54) **SEPARATOR FOR RECHARGEABLE LITHIUM BATTERY AND RECHARGEABLE LITHIUM BATTERY INCLUDING THE SAME**

SEPARATOR FÜR WIEDERAUFLADBARE LITHIUMBATTERIE UND WIEDERAUFLADBARE LITHIUMBATTERIE DAMIT

SÉPARATEUR POUR BATTERIE RECHARGEABLE AU LITHIUM ET BATTERIE RECHARGEABLE AU LITHIUM LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2019 KR 20190025306**

(43) Date of publication of application:
**09.09.2020 Bulletin 2020/37**

(73) Proprietors:
- **Samsung SDI Co., Ltd.**
  **Gyeonggi-do 17084 (KR)**
- **Samsung Electronics Co., Ltd.**
  **Gyeonggi-do 16677 (KR)**

(72) Inventors:
- **Jang, Jungsue**
  **443-803 Suwon-si, Gyeonggi-do (KR)**
- **Cho, Minho**
  **443-803 Suwon-si, Gyeonggi-do (KR)**
- **Kim, Hana**
  **443-803 Suwon-si, Gyeonggi-do (KR)**
- **Park, Myungkook**
  **443-803 Suwon-si, Gyeonggi-do (KR)**
- **Yang, Seung Rim**
  **13566 Seongnam-si, Gyeonggi-do (KR)**
- **Lee, Byungmin**
  **443-803 Suwon-si, Gyeonggi-do (KR)**
- **Jung, Bokyung**
  **16543 Suwon-si, Gyeonggi-do (KR)**
- **Kim, Rae Sung**
  **18412 Hwaseong-si, Gyeonggi-do (KR)**

(74) Representative: **Gulde & Partner**
**Patent- und Rechtsanwaltskanzlei mbB**
**Wallstraße 58/59**
**10179 Berlin (DE)**

(56) References cited:
**CN-A- 108 155 326** **CN-A- 108 206 258**

EP 3 706 199 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

### (a) Field of the Invention

A separator for a rechargeable lithium battery and a rechargeable lithium battery including the same are disclosed.

### (b) Description of the Related Art

A separator for an electrochemical battery is an intermediate film that separates a positive electrode and a negative electrode in a battery, and maintains ion conductivity continuously to enable charge and discharge of a battery. When a battery is exposed to a high temperature environment due to abnormal behavior, a separator may be mechanically shrinks or is damaged due to melting characteristics at a low temperature. Herein, the positive and negative electrodes contact each other and may cause an explosion of the battery. In order to overcome this problem, technology of suppressing shrinkage of a separator and ensuring safety of a battery is required.

In this regard, a method of increasing a thermal resistance of the separator by mixing a heat-resistance binder with the inorganic particles and coating a separator is known. As the heat-resistance binder, an SBR (styrene-butadiene rubber) binder or an aqueous binder is generally used.

In the case of the SBR binder, mechanical properties of the SBR binder tend to be relatively low, leading to deterioration of long-term cycle-life characteristics of the battery.

As the aqueous binder, an acrylic binder may be applied in a form of a salt dissolved in water so as to improve a binding strength with the inorganic particles, and thus a moisture content of the separator may be increased due to moisture absorption of the salt, which tends to reduce long-term cycle-life characteristics of the battery.

Therefore, in order to provide a rechargeable lithium battery having excellent cycle-life characteristics, it is necessary to develop a separator capable of lowering a moisture content in the separator while having high heat resistance.

CN 108 155 326 A refers to a lithium ion battery separator comprising a porous polyolefin base coated with inorganic particles, e.g. alumina, boehmite or silica and one or more of polyurethane, PVA and acrylate.

CN 108 206 258 A describes a lithium ion battery separator including a porous polyolefin base and a coating layer. The coating layer includes a combination of one or more polyacrylic, polyurethane and PVA and boehmite, alumina or magnesia particles.

## SUMMARY OF THE INVENTION

A separator having a low content of residual moisture and a low shrinkage ratio at a high temperature, and a rechargeable lithium battery having excellent cycle-life characteristics and heat resistance characteristics are provided.

The invention is as defined in claims 1 and 2. A separator for a rechargeable lithium battery includes a porous substrate and a coating layer disposed on at least one surface of the porous substrate, wherein the coating layer includes a binder including polyurethane and polyvinyl alcohol and inorganic particles and the polyurethane and the polyvinyl alcohol are included in a weight ratio of 5 : 5 to 9 : 1. The polyurethane is a polyether-based polyurethane.

According to a first alternative of the inventive separator, the binder further comprises a (meth)acryl-based resin.

According to a second alternative of the inventive separator, the coating layer further comprises a cross-linking agent. The cross-linking agent is bound to the polyurethane and/or the inorganic particles.

Another embodiment of the invention as defined in claim 13, provides a rechargeable lithium battery including a positive electrode, a negative electrode, and the separator for a rechargeable lithium battery disposed between the positive electrode and the negative electrode.

The present invention provides a rechargeable lithium battery having a low content of residual moisture and a low shrinkage ratio at a high temperature, thereby ensuring both cycle-life characteristics and a heat resistance.

## BRIEF DESCRIPTION OF THE DRAWINGS

FIG. 1 is an exploded perspective view of a rechargeable lithium battery according to an embodiment.

FIG. 2 is a graph showing capacity retention during 45 °C/500 cycles of the rechargeable lithium battery cells

according to Examples 1 and 2 and Comparative Example 3.

## DETAILED DESCRIPTION OF THE EMBODIMENTS

Hereinafter, embodiments of the present invention are described in detail. However, these embodiments are exemplary, the present invention is not limited thereto and the present invention is defined by the scope of claims.

As used herein, when a definition is not otherwise provided, "combination thereof" refers to a mixture, a copolymer, a blend, an alloy, a composite, a reaction product of components.

As used herein, "(meth) acryl" may mean both acrylic and methacryl.

In order to clearly describe the present disclosure, parts which are not related to the description are omitted, and the same reference numeral refers to the same or like components, throughout the specification. In addition, since the size and the thickness of each component shown in the drawing are optionally represented for convenience of the description, the present disclosure is not limited to the illustration.

In the drawings, the thickness of layers, films, panels, regions, etc., are exaggerated for clarity. In the drawings, the thickness of a part of layers or regions, etc., is exaggerated for clarity. It will be understood that when an element such as a layer, film, region, or substrate is referred to as being "on" another element, it can be directly on the other element or intervening elements may also be present.

A separator for a rechargeable lithium battery according to an embodiment includes a porous substrate and a coating layer, wherein the coating layer includes a binder including polyurethane and polyvinyl alcohol and inorganic particles and the polyurethane and the polyvinyl alcohol are included in a weight ratio of 5 : 5 to 9 : 1.

The porous substrate may have a plurality of pores and may generally be a porous substrate used in an electrochemical device. Non-limiting examples of the porous substrate may be a glass fiber or a polymer film formed of a polymer, or a copolymer or a mixture of two or more selected from polyolefin such as polyethylene, polypropylene, and the like, a polyester such as polyethyleneterephthalate, polybutyleneterephthalate, and the like, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylenenaphthalate, Teflon, and polytetrafluoroethylene.

The porous substrate may be for example a polyolefin-based substrate, and the polyolefin-based substrate may improve has safety of a battery due to its improved shutdown function. The polyolefin-based substrate may be for example selected from a polyethylene single film, a polypropylene single film, a polyethylene/polypropylene double film, a polypropylene/polyethylene/polypropylene triple film, and a polyethylene/polypropylene/polyethylene triple film. In addition, the polyolefin-based resin may include a non-olefin resin in addition to an olefin resin or a copolymer of olefin and a non-olefin monomer.

The porous substrate may have a thickness of about 1 μm to about 40 μm, for example about 1 μm to about 30 μm, about 1 μm to about 20 μm, about 5 μm to about 20 μm, about 5 μm to about 15 μm, or about 10 μm to about 15 μm.

The coating layer is disposed on at least one surface of the porous substrate and includes a binder including polyurethane and polyvinyl alcohol and inorganic particles. For example, the coating layer composition may be coated on one surface of the porous substrate by a gravure coating method to provide the coating layer.

The polyurethane and the polyvinyl alcohol may be applied in the form of a mixed composition.

The polyurethane is a polymer having a plurality of urethane bonds, and the urethane bonds refers to a [-NHC(O)O-] structure formed by reacting an active hydroxyl group (-OH) of an alcohol and an isocyanate group (-N=C=O) of an isocyanate as in Formula 1.

[Formula 1]

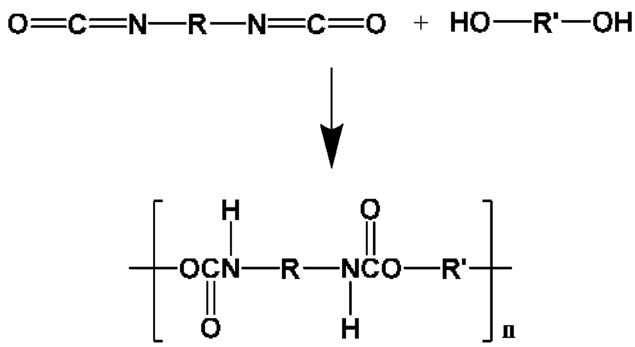

The alcohol as a reactant for forming the polyurethanes is a polyether polyol.

The polyurethane according to an embodiment of the present invention is a polyether-based polyurethane formed from a polyether polyol and the polyether polyol may be an alcohol compound or a polymer having a polyvalent active hydroxyl group.

For example, the polyether polyol may be prepared by reacting alkylene oxide with an initiator such as glycerol, and more specifically, may be prepared by reacting propylene oxide with an initiator such as glycerol, or copolymerizing ethylene oxide therewith to prepare a copolymer.

The terminal end -OH group of the polyether polyol reacts with a polyvalent isocyanate group to provide polyether polyurethane.

The isocyanate as a reactant which forms the polyurethane may be conventionally used isocyanate for preparing polyurethane.

For example, the isocyanate includes, for example, aromatic diisocyanate having 6 to 20 carbon atoms (excluding carbon in NCO group, same as below), aliphatic diisocyanate having 2 to 18 carbon atoms, alicyclic diisocyanate having 4 to 15 carbon atoms, araliphatic diisocyanate having 8 to 15 carbon atoms, (such as carbodiimide-modified diisocyanate, urethane-modified diisocyanate, uretdione-modified diisocyatate, etc.) modified ones of these diisocyanates, and mixtures of two or more types thereof.

As used herein, "araliphatic" may mean aliphatic compound containing one or more aryl groups.

Specific examples of the aromatic diisocyanate include 1,3- or 1,4-phenylene diisocyanate, 2,4- or 2,6-tolylene diisocyanate, 2,4'- or 4,4'-diphenylmethanedi isocyanate (hereinafter "MDI"), 4,4'-diisocyanatobiphenyl, 3,3'-dimethyl-4,4'-diisocyanatobiphenyl, 3,3'-dimethyl-4,4'- diisocyanatodiphenylmethane, 1,5-naphthylene diisocyanate, and the like.

Specific examples of the aliphatic diisocyanate include ethylene diisocyanate, tetramethylene diisocyanate, hexamethylene diisocyanate, dodecamethylene diisocyanate, 2,2,4-trimethylhexamethylene diisocyanate, lysine diisocyanate, 2,6-diisocyanatomethylcaproate, bis(2-isocyanatoethyl) carbonate, 2-isocyanatoethyl-2,6-diisocyanatohexanoate, and the like.

Specific examples of the alicyclic diisocyanate include isophorone diisocyanate, dicyclohexyl methane-4,4'-diisocyanate, cyclohexylene diisocyanate, methylcyclohexylene diisocyanate, bis(2-isocyanatoethyl)-4-cyclohexylene-1,2-dicarboxylate, 2,5- or 2,6-norbornane diisocyanate, and the like.

Specific examples of the araliphatic diisocyanate include m- or p-xylylene diisocyanate, α, α, α ', α'-tetramethylxylylene diisocyanate, and the like.

It may be desirably an aromatic diisocyanate and an alicyclic diisocyanate, more desirably an aromatic diisocyanate, and even more desirably MDI.

A weight average molecular weight of the polyether-based polyurethane may be about 1,000 to about 150,000, for example about 10,000 to about 150,000, or about 100,000 to about 150,000.

By including the polyether-based polyurethane, a water repellent function may be improved, and thus water adsorption of the separator may be lowered, and consequently a water content of the separator may be lowered, improving long-term cycle-life characteristics of the battery.

The polyvinyl alcohol according to an embodiment of the present invention may be used without limitation as long as it is known in the art.

A saponification degree (measured based on JIS K 6726 (1994 version)) of the polyvinyl alcohol may be greater than or equal to about 80 mol%, for example, about 80 mol% to about 100 mol%, or about 90 mol% to about 100 mol%, or about 95 mol% to about 100 mol%. If the saponification degree is too low, the number of hydroxyl groups may be decreased and adhesion may be decreased, so that adhesion performance between the current collector and the active material may be decreased.

In addition, an average polymerization degree (measured based on JIS K 6726 (1994 version)) of the polyvinyl alcohol may be greater than or equal to about 300, for example, about 300 to about 3,500, about 500 to about 3,500, or about 1,500 to about 3,500. If the average polymerization degree is too low, mechanical strength, adhesion, etc. may be deteriorated, while if the average polymerization degree is too high, an elastic force may be decreased, and solubility in the solvent during the electrode manufacturing process may be decreased so that it tends to be difficult to handle.

In the polyether-based polyurethane included in the coating layer composition according to an embodiment, there is no functional group capable of reacting with the hydroxyl group (-OH) of polyvinyl alcohol, the polyurethane and polyvinyl alcohol have no cross-linking reactivity. As such, they may be present in the composition in a simply mixed form rather than in a cross-linked polymer.

The polyurethane and the polyvinyl alcohol are included in a weight ratio of 5: 5 to 9: 1, respectively.

For example, the polyurethane and the polyvinyl alcohol may be included in a weight ratio of 5: 5 to 8: 2 or a weight ratio of 6: 4 to 8: 2, respectively.

When the contents of the polyurethane and polyvinyl alcohol are within the above range, water-reducing effects and ion conductivity required in the separator may simultaneously be achieved.

The binder may further include a heat-resistance binder.

The heat-resistance binder may connect the inorganic particles included in the coating layer in a point contact or a surface contact manner to prevent the inorganic particles from being detached.

The heat-resistance binder is a (meth)acryl-based resin.

The (meth)acryl-based resin may include an acrylic copolymer including a repeating unit derived from an alkyl (meth)acrylate monomer as an example of a polymer of a (meth)acrylic monomer. Examples of the alkyl (meth)acrylate monomers may include n-butyl (meth)acrylate, ethyl (meth)acrylate, propyl (meth)acrylate, t-butyl (meth)acrylate and isobutyl (meth)acrylate, pentyl (meth)acrylate, hexyl (meth)acrylate, heptyl (meth)acrylate, isooctyl (meth)acrylate, octyl (meth)acrylate, nonyl (meth)acrylate, decyl (meth)acrylate, undecyl (meth)acrylate, lauryl (meth)acrylate, methyl (meth)acrylate, isobornyl (meth)acrylate, cyclohexyl (meth)acrylate, but are not limited thereto. For example, straight or branched alkyl (meth)acrylate having 1 to 20 carbon atoms may be used.

The (meth)acryl-based resin may be included in an amount of 10 wt% to 80 wt%, for example, 20 wt% to 70 wt% or 30 wt% to 50 wt%, based on a total amount of the binder.

The polyurethane may be included in an amount of 10 wt% to 80 wt%, for example 20 wt% to 80 wt% or 30 wt% to 80 wt%, based on a total amount of the binder.

The polyvinyl alcohol may be included in an amount of 5 wt% to 30 wt%, for example 10 wt% to 30 wt% or 10 wt% to 25 wt%, based on a total amount of the binder.

Since the (meth)acryl-based resin is included in the above range, not only the adhesive force of the separator may be improved but also heat resistance may be ensured. In addition, by including the polyurethane in the above range, a water-reducing effect may be obtained, and by including the polyvinyl alcohol in the above range, the adhesive effect of the inorganic particles and the film may be obtained.

As another example, the heat-resistance binder may be a cross-linked polymer obtained by a reaction of the polyurethane and a cross-linking agent.

For example, the cross-linking agent may be a monomer, an oligomer, and/or a polymer including a functional group having reactivity with inorganic particles and/or a polar functional group of the polyurethane.

The functional group of the cross-linking agent may form a covalent bond with the polar functional group present in the inorganic particles and/or the polyurethane, and thus may serve to be more firmly bound to the inorganic particles and the polyurethane.

That is, in the binder, the polyurethane and the inorganic particles may be organically connected through a cross-linking agent, and as a result, the coating layer may be improved in heat resistance without separately including a heat-resistance binder such as a (meth)acryl-based resin. In addition, a surface area of the polyurethane exposed on the surface of the coating layer may be increased, thereby improving adhesion to the electrode plate.

The cross-linking agent may be present in the form of a cross-linked polymer which is a resulting material of a reaction with the inorganic particles and/or the polyurethane in a binder.

The cross-linking agent may include a functional group having reactivity with a polar functional group. For example, the cross-linking agent may include a functional group having reactivity with a carboxyl group, a functional group having reactivity with a hydroxy group, a functional group having reactivity an amine group, a functional group having reactivity water, or a combination thereof.

For example, the cross-linking agent may be a monomer, an oligomer, and/or a polymer including a functional group having reactivity a carboxyl group of the polyurethane.

Specifically, the cross-linking agent may be a carbodiimide-based compound, a melamine compound, an aziridine compound, an isocyanate compound, or a combination thereof. Specific examples of the carbodiimide-based compound may include N,N'-di-o-tolylcarbodiimide, N,N'-diphenylcarbodiimide, N,N'-dioctyldecylcarbodiimide, N,N'-di-2,6-diketylphenylcarbodiimide, N-tolyl-N'cyclohexylcarbodiimide, N,N'-di-2,6-diisopropylphenylcarbodiimide, N,N'-di -2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, N,N'-di-p-tolylcarbodiimide, p-phenylene-bis-di-o-tolyl carbodiimide, p-phenylene-bisdicyclohexylcarbodiimide, hexamethylene-bisdicyclohexylcarbodiimide, ethylene-bisdiphenylcarbodiimide, benzene-2,4-diisocyanato-1,3,5-tris(1-methylethyl) homopolymer, a copolymer of 2,4-diisocyanato-1,3,5-tris(1-methylethyl) and 2,6-diisopropyl diisocyanate, or a combination thereof, but are not necessarily limited thereto, and may be any carbodiimide compound in the art.

In the binder, the carbodiimide-based compound may exist in a form of a cross-linked polymer which is a resulting material of a reaction with the inorganic particles and/or polyurethane. For example, the diimide bond of the carbodiimide-based compound may react with the carboxyl group of the polyurethane to provide a cross-linked polymer in which a new covalent bond is formed.

For example, the cross-linking agent may be a silane coupling agent. The silane coupling agent is an organosilicon compound having a hydrolyzable functional group. The hydrolyzable functional group is a functional group capable of bonding with inorganic particles such as silica after hydrolysis. For example, the silane coupling agent may include one or more selected from an alkoxy group, a halogen group, an amino group, a vinyl group, a glycidoxy group, and a hydroxy group.

Specifically, the silane coupling agent may be at least one selected from vinylalkylalkoxysilane, epoxyalkylalkoxysilane, mercaptoalkylalkoxysilane, vinylhalosilane, and alkylacyloxysilane.

Specific examples of the silane coupling agent may include vinylalkylalkoxysilanes such as vinyltris(β-methoxyethoxy) silane and γ-methacrylooxypropyltrimethoxysilane; epoxy alkylalkoxysilanes such as γ-glycidoxypropyltrimethoxysilane, β-(3,4-epoxycyclohexyl) ethyltrimethoxysilane, and γ-glycidoxypropylmethyldiethoxysilane; aminoalkylalkoxysilanes such as γ-aminopropyltriethoxysilane; mercaptoalkylalkoxysilanes such as γ-mercaptopropyltrimethoxysilane; halogenated alkylalkoxysilanes such as γ-chloropropyltrimethoxysilane; vinyl halosilanes such as vinyl trichlorosilane; alkylacyloxysilanes such as methyltriacetoxysilane; and the like, but are not necessarily limited thereto, and may be any silane coupling agent that may be used in the art.

In addition to the cross-linking agent, a hydrazine compound, a urea compound, an epoxy compound, an oxazoline compound, and the like may be used. However, the present invention is not limited thereto, and any one that may be used as a cross-linking agent in the art may be used. These compounds may be used alone or in a mixture.

Specifically, APA series (APA-M950, APA-M980, APA-P250, APA-P280, etc.) of Otsuka Chemical Co., Ltd. may be used as the hydrazine compound.

BASONAT PLR8878 from BASF, BASONAT HW-100, Bayhydur 3100 from Sumitomo Bayurethane Co., Ltd., Bayheur VPLS2150/1, and the like may be used as the isocyanate compound.

As the melamine compound, Cymel 325 etc. of Mitsui Cytec Company may be used.

As the urea compound, becamine series etc. made by DIC Corporation may be used.

As the epoxy compound, the denacor series (EM-150, EM-101, etc.) by Nagase Chemtech Co., Ltd., and Adegin EM-00517, EM-0526, EM-051R, EM-11-50B by ADEKA Corporation, and the like may be used.

As the carbodiimide compound, carbojilite series of Nisshinbo Chemical Co., Ltd. (SV-02, V-02, V-02-L2, V-04, E-01, E-02, V-01, V-03, V- 07, V-09, V-05, and the like may be used.

As the oxazoline compound, Nippon Shokubai's epochross series (WS-500, WS-700, K-1010E, K-1020E, K-1030E, K-2010E, K-2020E, K-2030E), and the like may be used..

These are commercially available as a dispersion body or solution including a cross-linking agent.

The cross-linking agent may be included in an amount of 0.03 parts by weight to 10 parts by weight based on 100 parts by weight of the binder. For example, it may be included in an amount of 0.03 parts by weight to 7 parts by weight, 0.1 parts by weight to 7 parts by weight, or 1 part by weight to 7 parts by weight.

When the content of the cross-linking agent satisfies the above range, the cross-linking agent may sufficiently be bound to the polyurethane and the inorganic particles, and thus a rechargeable lithium battery including the same may secure sufficient heat resistance. In addition, when the content of the cross-linking agent satisfies the above range, a large amount of unreacted cross-linking agent does not remain, thereby preventing deterioration of characteristics of a rechargeable lithium battery including the same.

The cross-linked polymer may further improve heat resistance as the cross-linking degree becomes higher.

The cross-linked polymer may have a weight average molecular weight of about 500 g/mol to about 80,000 g/mol, for example, about 2,000 g/mol to about 60,000 g/mol. Heat resistance may be ensured by including the cross-linked binder which has the weight average molecular weight within the range.

In addition, due to the cross-linked structure, impregnation of an electrolyte may be improved, and when the separator is used in a battery, the charge and discharge characteristics of the battery may be improved. In addition, binder components are not easily dissolved in the electrolyte by physical and chemical bonds between the molecules constituting the binder.

Meanwhile, the composition for forming the coating layer may include a dispersant and a solvent in addition to the polyurethane and the cross-linking agent.

The dispersant may be included in an amount of 0.1 parts by weight to 10 parts by weight based on 100 parts by weight of the inorganic particles. For example, it may be included in an amount of 0.1 parts by weight to 5 parts by weight.

The solvent is not particularly limited as long as it is capable of dissolving or dispersing the aforementioned polyurethane, polyvinyl alcohol, (meth) acrylic resin, cross-linking agent and dispersant, and may include, for example, one of or at least two of water (pure water, ultrapure water, distilled water, ion exchanged water, etc.); alcohols such as methanol, ethanol and isopropyl alcohol; dimethylformamide, dimethylacetamide, tetramethylurea, triethylphosphate, N-methyl-2-pyrrolidone, dimethyl sulfoxide, acetone, methyl ethyl ketone, methyl isobutyl ketone, and cyclohexanone. For example, the aqueous solvent may be used, but is not limited thereto.

The curing may be performed by a method of photo-curing, thermal curing, or a combination thereof. The photo-curing may be performed, for example, by irradiating UV at about 150 nm to about 170 nm for about 5 seconds to about 60 seconds.

The thermal curing may be performed, for example, at a temperature of about 60 °C to about 120 °C for about 1 hour to about 36 hours, for example, at a temperature of about 80 °C to about 100 °C for about 10 hours to about 24 hours.

The inorganic particles may prevent the separator from being rapidly contracted or deformed due to temperature increase. The inorganic particles may be a ceramic material capable of improving heat resistance, for example, $Al_2O_3$,

$SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto. The inorganic particles may be spherical, plate-shaped, cubic, or amorphous. An average particle diameter of the inorganic particles may be about 0.3 μm to about 0.9 μm, for example about 0.4 μm to about 0.9 μm, or about 0.5 μm to about 0.9 μm.

The average particle diameter of the inorganic particles may be a particle size ($D_{50}$) at 50% by volume in a cumulative size-distribution curve. By using inorganic particles having the average particle diameter within the above range, it is possible to impart proper strength to the coating layer, thereby improving heat resistance, durability, and stability of the separator.

The binder may be included in an amount of about 1 wt% to about 10 wt%, for example about 2 wt% to about 8 wt%, based on a total amount of the coating layer.

The inorganic particles may be included in an amount of about 90 wt% to about 99 wt% based on a total amount of the coating layer. For example, the inorganic particles may be included in an amount of about 92 wt% to about 98 wt%, for example about 93 wt% to about 98 wt%, about 94 wt% to about 98 wt%, or about 95 wt% to about 98 wt% based on a total amount of the coating layer.

When the coating layer includes the binder and inorganic particles within the above ranges, the separator for a rechargeable lithium battery may exhibit improved heat resistance, durability, oxidation resistance, and stability.

A thickness of the coating layer may be about 3.0 μm to about 7 μm. For example, it may be about 3.0 μm to about 6 μm, or about 3.0 μm to about 5 μm.

A ratio of the thickness of the coating layer relative to the thickness of the porous substrate may be about 0.05 to about 0.5, for example, about 0.05 to about 0.4, or about 0.05 to about 0.3. In this case, the separator including the porous substrate and the coating layer may exhibit improved air permeability, heat resistance, and adhesion.

The separator for the rechargeable lithium battery according to an embodiment may be manufactured by various known methods. For example, the separator for the rechargeable lithium battery may be formed by coating a composition for forming a coating layer on one or both surfaces of the porous substrate and then drying it.

The coating may be, for example a spin coating, a dip coating, a bar coating, a die coating, a slit coating, a roll coating, an inkjet printing, and the like, but is not limited thereto.

The drying may be for example performed through natural drying, drying with warm air, hot air, or low humid air, vacuum-drying, or radiation of a far-infrared ray, an electron beam, and the like, but the present disclosure is not limited thereto. The drying may be for example performed at a temperature of about 25 °C to about 120 °C.

The separator for the rechargeable lithium battery may be manufactured by lamination, coextrusion, and the like in addition to the above method.

Hereinafter, a rechargeable lithium battery including the separator for the rechargeable lithium battery is described.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on a shape. In addition, it may be bulk type and thin film type depending on sizes. Structures and manufacturing methods for these batteries pertaining to this disclosure are well known in the art.

Herein, as an example of a rechargeable lithium battery, a cylindrical rechargeable lithium battery is for example described. FIG. 1 is an exploded perspective view showing a rechargeable lithium battery according to an embodiment. Referring to FIG. 1, a rechargeable lithium battery 100 according to an embodiment includes a battery cell including a negative electrode 112, a positive electrode 114 facing the negative electrode 112, a separator 113 disposed between the negative electrode 112 and the positive electrode 114, and an electrolyte solution (not shown) immersed in the negative electrode 112, positive electrode 114 and separator 113, a battery case 120 housing the battery cell, and a sealing member 140 sealing the battery case 120.

The positive electrode 114 includes a positive current collector and a positive active material layer formed on the positive current collector. The positive active material layer includes a positive active material, a positive electrode binder, and optionally a conductive material.

The positive current collector may use aluminum, nickel, and the like, but is not limited thereto.

The positive active material may use a compound capable of intercalating and deintercalating lithium. Specifically, at least one of a composite oxide or a composite phosphate of a metal selected from cobalt, manganese, nickel, aluminum, iron, or a combination thereof and lithium may be used. For example, the positive active material may be a lithium cobalt oxide, a lithium nickel oxide, a lithium manganese oxide, a lithium nickel cobalt manganese oxide, a lithium nickel cobalt aluminum oxide, a lithium iron phosphate, or a combination thereof.

The positive electrode binder improves binding properties of positive active material particles with one another and with a current collector, and specific examples may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto. These may be used alone or as a mixture of two or more.

The conductive material improves conductivity of an electrode and examples thereof may be natural graphite, artificial graphite, carbon black, a carbon fiber, a metal powder, a metal fiber, and the like, but are not limited thereto. These may be used alone or as a mixture of two or more. The metal powder and the metal fiber may use a metal of copper, nickel, aluminum, silver, and the like.

The negative electrode 112 includes a negative current collector and a negative active material layer formed on the negative current collector.

The negative current collector may use copper, gold, nickel, a copper alloy, and the like, but is not limited thereto.

The negative active material layer may include a negative active material, a negative electrode binder, and optionally a conductive material. The negative active material may be a material that reversibly intercalates/deintercalates lithium ions, a lithium metal, a lithium metal alloy, a material capable of doping and dedoping lithium, a transition metal oxide, or a combination thereof.

The material that reversibly intercalates/deintercalates lithium ions may be a carbon material which is any generally-used carbon-based negative active material, and examples thereof may be crystalline carbon, amorphous carbon, or a combination thereof. Examples of the crystalline carbon may be graphite such as amorphous, sheet-shape, flake, spherical shape or fiber-shaped natural graphite or artificial graphite. Examples of the amorphous carbon may be soft carbon or hard carbon, a mesophase pitch carbonized product, fired coke, and the like. The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn. The material capable of doping and dedoping lithium may be Si, $SiO_x$ ($0<x<2$), a Si-C composite, a Si-Y alloy, Sn, $SnO_2$, a Sn-C composite, a Sn-Y alloy, and the like, and at least one of these may be mixed with $SiO_2$. Specific examples of the element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The transition metal oxide may be vanadium oxide, lithium vanadium oxide, and the like.

The negative electrode binder and the conductive material used in the negative electrode 112 may be the same as the positive electrode binder and the conductive material of the aforementioned positive electrode 114.

The positive electrode 114 and the negative electrode 112 may be manufactured by mixing each active material composition including each active material and a binder, and optionally a conductive material in a solvent, and coating the active material composition on each current collector. Herein, the solvent may be N-methylpyrrolidone, and the like, but is not limited thereto. The electrode manufacturing method is well known, and thus is not described in detail in the present specification.

The electrolyte solution includes an organic solvent a lithium salt.

The organic solvent serves as a medium for transmitting ions taking part in the electrochemical reaction of a battery. The organic solvent may be a carbonate-based solvent, an ester-based solvent, an ether-based solvent, a ketone-based solvent, an alcohol-based solvent, and an aprotic solvent. The carbonate-based solvent may be dimethyl carbonate, diethyl carbonate, dipropyl carbonate, methylpropyl carbonate, ethylpropyl carbonate, methylethyl carbonate, ethylene carbonate, propylene carbonate, butylene carbonate, and the like, and the ester-based solvent may be methyl acetate, ethyl acetate, n-propyl acetate, 1,1-dimethylethyl acetate, methylpropionate, ethylpropionate, $\gamma$-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like, and the ketone-based solvent may be cyclohexanone, and the like. The alcohol-based solvent may be ethanol, isopropyl alcohol, and the like, and the aprotic solvent may be nitriles such as R-CN (R is a C2 to C20 linear, branched, or cyclic hydrocarbon group, a double bond, an aromatic ring, or an ether bond), and the like, amides such as dimethyl formamide, dioxolanes such as 1,3-dioxolane, sulfolanes, and the like.

The organic solvent may be used alone or in a mixture of two or more, and when the organic solvent is used in a mixture of two or more, the mixture ratio may be controlled in accordance with a desirable cell performance.

The lithium salt is dissolved in an organic solvent, supplies lithium ions in a battery, basically operates the rechargeable lithium battery, and improves lithium ion transportation between positive and negative electrodes therein. Examples of the lithium salt may include $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), LiCl, LiI, $LiB(C_2O_4)_2$, or a combination thereof, but are not limited thereto.

The lithium salt may be used in a concentration ranging from about 0.1 M to about 2.0 M. When the lithium salt is included within the above concentration range, an electrolyte may have excellent performance and lithium ion mobility due to optimal electrolyte conductivity and viscosity.

Hereinafter, the above aspects of the present disclosure are illustrated in more detail with reference to examples. However, these examples are exemplary, and the present disclosure is not limited thereto.

## Examples

### Example 1

3.81 parts by weight of polyether-based polyurethane (Sancure 2710, Lubrizol), 0.23 parts by weight of a cross-linking agent (Picassian® XL-732, STAHL), 0.95 parts by weight of polyvinyl alcohol (PVA-500, Daejung Chemicals and Metals Co., Ltd.), 95.24 parts by weight of boehmite (Nabaltec AOH60), and 150 parts by weight of DI water were mixed and dispersed with a mechanical stirring equipment at 25°C for 30 minutes to prepare coating layer composition having a solid content of 40 wt%.

The composition was bar-coated to be 3 μm thick on a 12 μm-thick polyethylene porous substrate (Air permeability: 120 sec/100cc, Puncture strength: 450 kgf, SK Co., Ltd.) and then, dried at 70°C for 10 minutes to manufacture a separator for rechargeable lithium battery cell.

### Example 2

1.9 parts by weight of polyether-based polyurethane (Sancure 2710, Lubrizol), 0.95 parts by weight of polyvinyl alcohol (PVA-500, Daejung Chemicals and Metals Co., Ltd.), 1.9 parts by weight of a (meth)acryl-based resin (Carbosperse-k-702, Lubrizol), 95.24 parts by weight of boehmite (Nabaltec AOH60), and 150 parts by weight of DI (deionized) water were mixed and dispersed with a mechanical stirring equipment at 25°C for 30 minutes to prepare a coating layer composition having a solid content of 40 wt%, and then, the coating layer composition was used to manufacture a separator for a rechargeable battery according to the same method as Example 1.

### Comparative Example 1

3.8 parts by weight of polyether-based polyurethane (Sancure 2710, Lubrizol), 0.95 parts by weight of polyvinyl alcohol (PVA-500, Daejung Chemicals and Metals Co., Ltd.), 95.24 parts by weight of boehmite (Nabaltec AOH60), and 150 parts by weight of DI (deionized) water were mixed and dispersed with a mechanical stirring equipment at 25°C for 30 minutes to prepare a coating layer composition having a solid content of 40 wt%, and then, the coating layer composition was used to manufacture a separator for a rechargeable battery according to the same method as Example 1.

### Comparative Example 2

A separator for a rechargeable battery was manufactured according to the same method as Example 1 except that 1.9 parts by weight of a polyester-based polyurethane (Sancure 835, Lubrizol), 1.9 parts by weight of a (meth)acryl-based resin (Carbosperse-k-702, Lubrizol), 0.95 parts by weight of polyvinyl alcohol (PVA-500, Daejung Chemicals and Metals Co., Ltd.), 95.24 parts by weight of boehmite (Nabaltec AOH60), and 150 parts by weight of DI (deionized) water were used instead of the polyether-based polyurethane.

### Comparative Example 3

3.8 parts by weight of a (meth)acryl-based resin (Carbosperse-k-702, Lubrizol), 0.95 parts by weight of polyvinyl alcohol (PVA-500, Daejung Chemicals and Metals Co., Ltd.), 95.24 parts by weight of boehmite (Nabaltec AOH60), and 150 parts by weight of DI (deionized) water were mixed and dispersed with a mechanical stirring equipment at 25°C for 30 minutes to prepare a coating layer composition having a solid content of 40 wt%, and then, the coating layer composition was used to manufacture a separator for a rechargeable battery according to the same method as Example 1.

## Evaluation Example 1: Evaluation of Moisture Characteristics

A method of measuring moisture contents of the separators is not particularly limited, and non-limiting examples thereof are as follows: the separators respectively having a coating layer (after removing a package when packed) were stored in an 80°C chamber for 24 hours, and stored in an 17°C to 20 °C, at a dew point of -80°C to -90°C for 24 hours, and then, 2.0 g to 3.0 g of each separator was loaded in a capping vial. The vial was put in 860 Thermoprep (Metrohm AG) and heated at 150°C, and moisture contents (X ppm) of the separators were measured through automatic moisture measurement in a Karl-Fisher method for 10 minutes with 831 KF coulometer (Metrohm AG).

The results are shown in Table 1.

**Evaluation Example 2: High-temperature Shrinkage Rate Characteristics of Separators**

A method of measuring thermal shrinkage rates of the separators is not particularly limited thereto but may be a common method used in a technology field of the present invention. Non-limiting examples of the method of the thermal shrinkage rates of the separators are as follows: the separators were respectively cut into a width (MD) of about 10 cm × a length (TD) of about 10 cm, stored in a 200°C chamber for 10 minutes, and then, measured with respect to a shrinkage rate in a MD direction and in a TD direction to respectively calculate an MD direction thermal shrinkage rate and a TD direction thermal shrinkage rate according to Formulae 2 and 3, and large measurements among the MD direction thermal shrinkage rates and the TD direction thermal shrinkage rates were provided as final values in Table 1.

[Formula 2]

Thermal shrinkage rate in MD direction = (MD direction length after evaluation of high-temperature shrinkage/MD direction length of the separator before evaluation) x 100

[Formula 3]

Thermal shrinkage rate in TD direction = (TD direction length after evaluation of high-temperature shrinkage/TD direction length of the separator before evaluation

The calculated values according to Formulae 2 and 3 are shown in Table 1.

(Table 1)

| | Drying at 80°C for 24 hr (ppm) | Thermal shrinkage rate (200°C, 1hr (%)) |
|---|---|---|
| Example 1 | 167 | 5%↓ |
| Example 2 | 353 | 5%↓ |
| Comparative Example 1 | 170 | 30%↑ |
| Comparative Example 2 | 1200 | 5%↓ |
| Comparative Example 3 | 1200 | 5%↓ |

Referring to Table 1, the separators including polyurethane and a (meth)acryl-based resin or a cross-linked polymer obtained by a reaction of the polyurethane and a cross-linking agent exhibited improved water repellent. Particularly, when polyether-based polyurethane was used rather than polyester-based polyurethane (Comparative Example 2), moisture-reducing characteristics were much improved.

In addition, the separators including the polyurethane and the (meth)acryl-based resin or the cross-linked polymer obtained by a reaction of the polyurethane and the cross-linking agent exhibited improved heat-resistance properties.

**Evaluation Example 3: Evaluation of High-temperature Cycle-life Characteristics**

(Manufacture of Rechargeable Battery Cells)

$LiCoO_2$ as a positive active material, polyvinylidene fluoride (PVDF) as a binder, and carbon as a conductive agent were mixed in a weight ratio of 92:4:4 and then, dispersed in N-methyl-2-pyrrolidone to prepare positive electrode slurry. This slurry was coated to be 20 μm thick on an aluminum foil and then, dried and compressed to manufacture a positive electrode.

Artificial graphite as a negative electrode active material, a styrene-butadiene rubber as a binder, and carboxylmethyl cellulose as a thickener were mixed in a weight ratio of 96:2:2 and dispersed in water to prepare negative electrode active material slurry. This slurry was coated to be 15 μm thick on a copper foil and then, dried and compressed to manufacture a negative electrode.

The manufactured positive and negative electrodes and the separators according to Examples 1 to 2 and

Comparative Example 3 respectively were used to manufacture cylindrical battery cells. An electrolyte solution was prepared by using a mixed solution of ethyl carbonate (EC)/ethylmethyl carbonate (EMC)/diethyl carbonate (DEC) (a volume ratio of 3/5/2) including $LiPF_6$ at a concentration of 1.3 M.

(Evaluation of High-temperature Cycle-life Characteristics)

The lithium rechargeable battery cells according to Examples 1 and 2 and Comparative Example 3 were charged and discharged at 45 °C in a range of 2.8 V to 4.2 V to conduct a standard charge and discharge experiment.

Subsequently, the cells were constant current-charged in a high temperature (45 °C) chamber at a current of 1.0 C rate up to 4.25 V and then, constant voltage-charged until the current reached 0.05 C while 4.25 V was maintained. Then, the cells were discharged down to a voltage of 2.8 V at a constant current of 1.0 C. This standard charge and standard discharge was performed once every $100^{th}$ charge and discharge. These charges and discharges were repeated up to 500 cycles to evaluate cycle-life characteristics. The cells were respectively measured with respect to discharge capacity at each cycle and discharge capacity at the $500^{th}$ cycle, which were used to calculate cycle capacity retention (%) at a high temperature (45 °C) according to Formula 4. The results are shown in FIG. 2.

[Formula 4]

High-temperature (45 °C) cycle capacity retention (%) = (discharge capacity at 500 cycles/discharge capacity at first cycle) x 100

FIG. 2 is a graph showing capacity retention during 45 °C/500 cycles.

Referring to FIG. 2, the rechargeable lithium battery cells manufactured according to Examples 1 and 2 were more improved in terms of high-temperature (45 °C) cycle capacity retention (%), compared with the rechargeable lithium battery cell manufactured according to Comparative Example 3.

In summary, the separators manufactured according to examples includes a coating layer including the polyether-based polyurethane, thereby realizing a separator having improved thermal stability and moisture resistance, and implementing a rechargeable battery having improved cycle-life characteristics.

## Claims

1. A separator (113) for a rechargeable lithium battery (100) comprising

   a porous substrate and a coating layer disposed on at least one surface of the porous substrate,
   wherein the coating layer comprises a binder comprising polyurethane and polyvinyl alcohol and inorganic particles, and
   the polyurethane and the polyvinyl alcohol are included in a weight ratio of 5 : 5 to 9 : 1,
   wherein the binder further comprises a (meth)acryl-based resin and
   wherein the polyurethane is a polyether-based polyurethane.

2. A separator (113) for a rechargeable lithium battery (100) comprising

   a porous substrate and a coating layer disposed on at least one surface of the porous substrate,
   wherein the coating layer comprises a binder comprising polyurethane and polyvinyl alcohol and inorganic particles, and
   the polyurethane and the polyvinyl alcohol are included in a weight ratio of 5 : 5 to 9 : 1;
   wherein the coating layer further comprises a cross-linking agent, the cross-linking agent being bound to the polyurethane and/or the inorganic particles, and
   wherein the polyurethane is a polyether-based polyurethane.

3. The separator (113) of claim 1 or 2, wherein the (meth)acryl-based resin is included in an amount of 10 wt% to 80 wt% based on a total amount of the binder.

4. The separator (113) of one of the preceding claims, wherein the polyurethane is included in an amount of 10 wt% to 80 wt% based on a total amount of the binder.

5. The separator (113) of one of the preceding claims, wherein the polyvinyl alcohol is included in an amount of 5 wt% to 30 wt% based on a total amount of the binder.

6. The separator (113) of claim 2, wherein the cross-linking agent is bound to the polyurethane to form a cross-linked polymer.

7. The separator (113) of claim 2 or 6, wherein the cross-linking agent is included in an amount of 0.03 parts by weight to 10 parts by weight based on 100 parts by weight of the binder.

8. The separator (113) of claims 2, 6 or 7, wherein the cross-linking agent comprises a carbodiimide-based compound, a melamine compound, an aziridine compound, an isocyanate compound, or a combination thereof.

9. The separator (113) of claims 6 to 8, which further comprises a dispersant.

10. The separator (113) of claim 9, wherein the dispersant is included in an amount of 0.1 parts by weight to 10 parts by weight based on 100 parts by weight of the inorganic particles.

11. The separator of one of the preceding claims, wherein an average polymerization degree of the polyvinyl alcohol is greater than or equal to 300 and a saponification degree of the polyvinyl alcohol is greater than or equal to 80 mol% both measured based on 6726:1994 of the Japanese Standards Association.

12. The separator of one of the preceding claims, wherein the inorganic particles are included in an amount of 90 wt% to 99 wt% based on a total amount of the coating layer.

13. A rechargeable lithium battery (100) comprising
a positive electrode (114), a negative electrode (112), and the separator (113) for the rechargeable lithium battery (100) of any one of claim 1 to claim 12 disposed between the positive electrode (114) and the negative electrode (112).

## Patentansprüche

1. Separator (113) für eine wiederaufladbare Lithiumbatterie (100), umfassend

   ein poröses Substrat und eine Überzugsschicht, die auf mindestens einer Oberfläche des porösen Substrats angeordnet ist,
   wobei die Überzugsschicht ein Bindemittel, das Polyurethan und Polyvinylalkohol enthält, sowie anorganische Partikel umfasst, und
   das Polyurethan und der Polyvinylalkohol in einem Gewichtsverhältnis von 5 : 5 bis 9 : 1 enthalten sind,
   wobei das Bindemittel außerdem ein Harz auf (Meth)acrylbasis umfasst und
   wobei das Polyurethan ein Polyurethan auf Polyetherbasis ist.

2. Separator (113) für eine wiederaufladbare Lithiumbatterie (100), umfassend

   ein poröses Substrat und eine Überzugsschicht, die auf mindestens einer Oberfläche des porösen Substrats angeordnet ist,
   wobei die Überzugsschicht ein Bindemittel, das Polyurethan und Polyvinylalkohol enthält, sowie anorganische Partikel umfasst, und
   das Polyurethan und der Polyvinylalkohol in einem Gewichtsverhältnis von 5 : 5 bis 9 : 1 enthalten sind;
   wobei die Überzugsschicht ferner ein Vernetzungsmittel enthält, wobei das Vernetzungsmittel an das Polyurethan und/oder die anorganischen Partikel gebunden ist, und
   wobei das Polyurethan ein Polyurethan auf Polyetherbasis ist.

3. Separator (113) nach Anspruch 1 oder 2, wobei das Harz auf (Meth)acrylbasis in einer Menge von 10 Gew.-% bis 80 Gew.-%, bezogen auf die Gesamtmenge des Bindemittels, enthalten ist.

4. Separator (113) nach einem der vorhergehenden Ansprüche, wobei das Polyurethan in einer Menge von 10 Gew.-% bis 80 Gew.-%, bezogen auf eine Gesamtmenge des Bindemittels, enthalten ist.

**5.** Separator (113) nach einem der vorhergehenden Ansprüche, wobei der Polyvinylalkohol in einer Menge von 5 Gew.-% bis 30 Gew.-%, bezogen auf eine Gesamtmenge des Bindemittels, enthalten ist.

**6.** Separator (113) nach Anspruch 2, wobei das Vernetzungsmittel an das Polyurethan gebunden ist, um ein vernetztes Polymer zu bilden.

**7.** Separator (113) nach Anspruch 2 oder 6, wobei das Vernetzungsmittel in einer Menge von 0,03 Gewichtsteilen bis 10 Gewichtsteilen, bezogen auf 100 Gewichtsteile des Bindemittels, enthalten ist.

**8.** Separator (113) nach Anspruch 2, 6 oder 7, wobei das Vernetzungsmittel eine Verbindung auf Carbodiimidbasis, eine Melaminverbindung, eine Aziridinverbindung, eine Isocyanatverbindung oder eine Kombination davon umfasst.

**9.** Separator (113) nach einem der Ansprüche 6 bis 8, der außerdem ein Dispersionsmittel enthält.

**10.** Separator (113) nach Anspruch 9, wobei das Dispersionsmittel in einer Menge von 0,1 Gewichtsteilen bis 10 Gewichtsteilen, bezogen auf 100 Gewichtsteile der anorganischen Partikel, enthalten ist.

**11.** Separator nach einem der vorhergehenden Ansprüche, wobei ein durchschnittlicher Polymerisationsgrad des Polyvinylalkohols größer oder gleich 300 ist und ein Verseifungsgrad des Polyvinylalkohols größer oder gleich 80 Mol-% ist, beide gemessen auf der Grundlage von 6726:1994 der Japanese Standards Association.

**12.** Separator nach einem der vorhergehenden Ansprüche, wobei die anorganischen Partikel in einer Menge von 90 Gew.-% bis 99 Gew.-%, bezogen auf die Gesamtmenge der Überzugsschicht, enthalten sind.

**13.** Wiederaufladbare Lithium-Batterie (100), umfassend
eine positive Elektrode (114), eine negative Elektrode (112) und den Separator (113) für die wiederaufladbare Lithiumbatterie (100) nach einem der Ansprüche 1 bis 12, der zwischen der positiven Elektrode (114) und der negativen Elektrode (112) angeordnet ist.

## Revendications

**1.** Séparateur (113) pour une batterie rechargeable au lithium (100), comprenant

un substrat poreux et une couche de revêtement disposée sur au moins une surface du substrat poreux,
dans lequel la couche de revêtement comprend un liant comprenant du polyuréthane et du poly(alcool vinylique) et des particules inorganiques, et
le polyuréthane et le poly(alcool vinylique) sont présents en un rapport en poids de 5:5 à 9:1,
dans lequel le liant comprend en outre une résine à base de (méth)acrylate et
dans lequel le polyuréthane est un polyuréthane à base de polyéther.

**2.** Séparateur (113) pour une batterie rechargeable au lithium (100), comprenant

un substrat poreux et une couche de revêtement disposée sur au moins une surface du substrat poreux,
dans lequel la couche de revêtement comprend un liant comprenant du polyuréthane et du poly(alcool vinylique) et des particules inorganiques, et
le polyuréthane et le poly(alcool vinylique) sont présents en un rapport en poids de 5:5 à 9:1,
dans lequel la couche de revêtement comprend en outre un agent de réticulation, l'agent de réticulation étant lié au polyuréthane et/ou aux particules inorganiques, et
dans lequel le polyuréthane est un polyuréthane à base de polyéther.

**3.** Séparateur (113) selon la revendication 1 ou 2, dans lequel la résine à base de (méth)acrylate est présente en une quantité de 10 % en poids à 80 % en poids par rapport à la quantité totale du liant.

**4.** Séparateur (113) selon l'une des revendications précédentes, dans lequel le polyuréthane est présent en une quantité de 10 % en poids à 80 % en poids par rapport à la quantité totale du liant.

**5.** Séparateur (113) selon l'une des revendications précédentes, dans lequel le poly(alcool vinylique) est présent en

une quantité de 5 % en poids à 30 % en poids par rapport à la quantité totale du liant.

6. Séparateur (113) selon la revendication 2, dans lequel l'agent de réticulation est lié au polyuréthane pour former un polymère réticulé.

7. Séparateur (113) selon la revendication 2 ou 6, dans lequel l'agent de réticulation est présent en une quantité de 0,03 partie en poids à 10 parties en poids pour 100 parties en poids du liant.

8. Séparateur (113) selon la revendication 2, 6 ou 7, dans lequel l'agent de réticulation comprend un composé à base de carbodiimide, un composé mélamine, un composé aziridine, un composé isocyanate, ou une de leurs combinaisons.

9. Séparateur (113) selon les revendications 6 à 8, qui comprend en outre un dispersant.

10. Séparateur (113) selon la revendication 9, dans lequel le dispersant est présent en une quantité de 0,1 partie en poids à 10 parties en poids pour 100 parties en poids des particules inorganiques.

11. Séparateur selon l'une des revendications précédentes, dans lequel un degré de polymérisation moyen du poly(alcool vinylique) est supérieur ou égal à 300 et un degré de saponification du poly(alcool vinylique) est supérieur ou égal à 80 % en moles, les deux mesurés sur la base de la norme japonaise 6726:1994.

12. Séparateur selon l'une des revendications précédentes, dans lequel les particules inorganiques sont présentes en une quantité de 90 % en poids à 99 % en poids par rapport à la quantité totale de la couche de revêtement.

13. Batterie rechargeable au lithium (100) comprenant
une électrode positive (114), une électrode négative (112), et le séparateur (113) pour la batterie rechargeable au lithium (100) selon l'une quelconque de la revendication 1 à la revendication 12 disposé entre l'électrode positive (114) et l'électrode négative (112).

FIG. 1

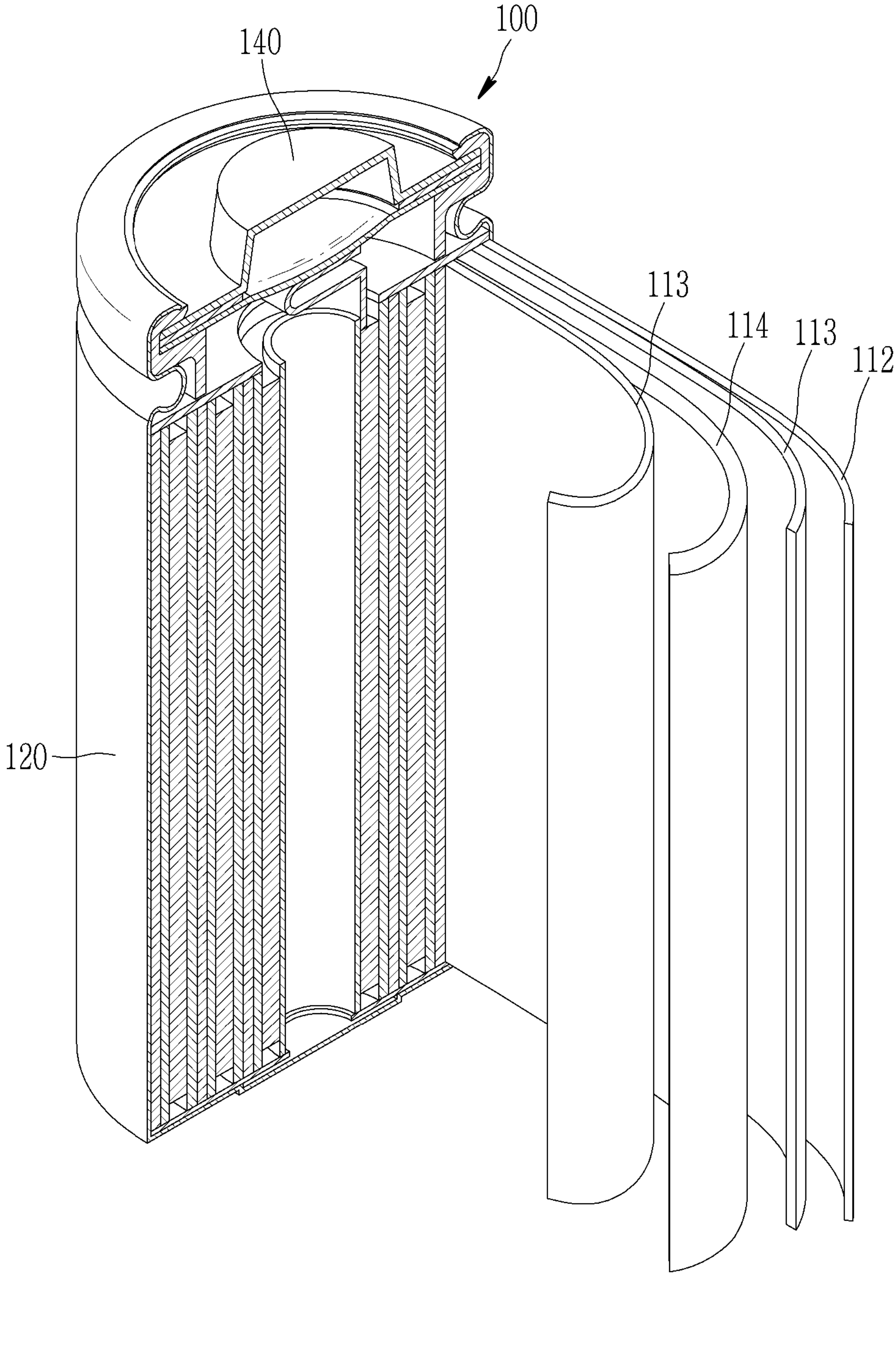

FIG. 2

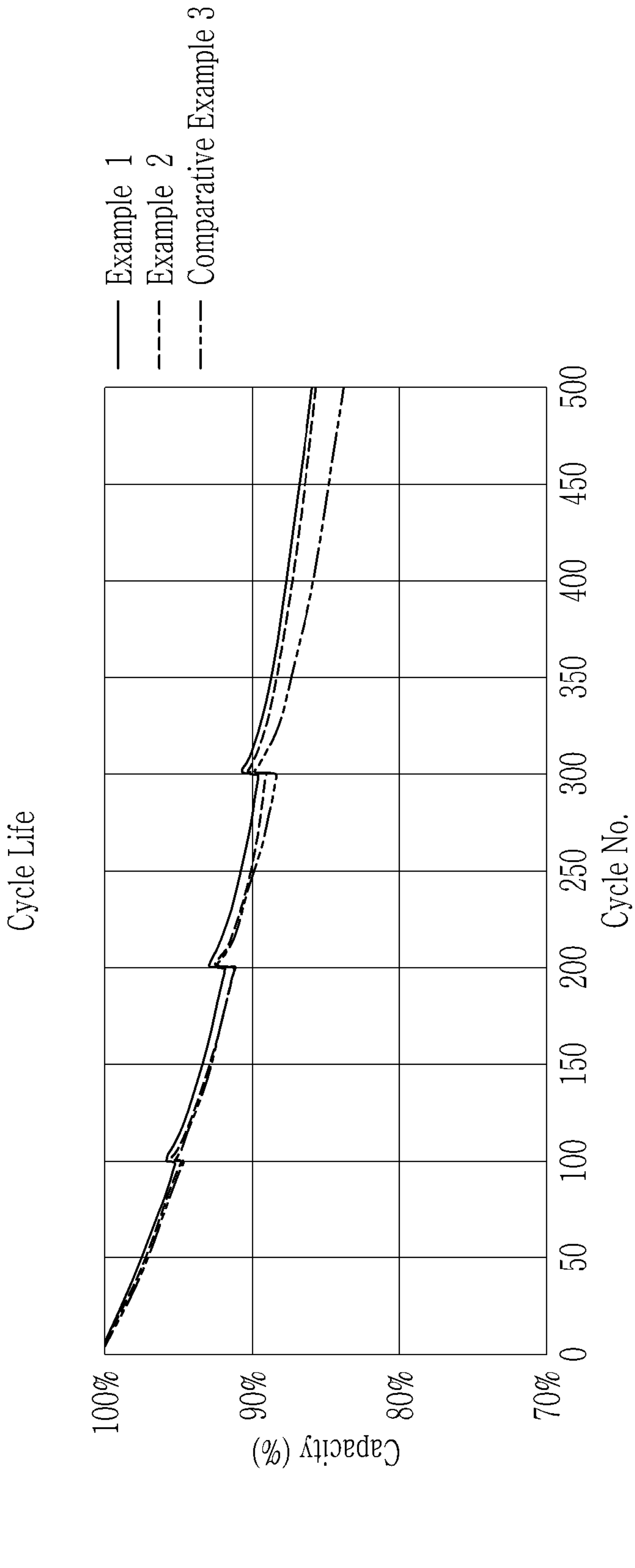
Cycle Life
Capacity (%)
100%
90%
80%
70%
0
50
100
150
200
250
300
350
400
450
500
Cycle No.
Example 1
Example 2
Comparative Example 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 108155326 A
- CN 108206258 A